Europäisches Patentamt

European Patent Office

Office européen des brevets

(11) Veröffentlichungsnummer: **0 364 867**
**A2**

## (12) EUROPÄISCHE PATENTANMELDUNG

(21) Anmeldenummer: **89118842.7**

(51) Int. Cl.5: **H04N 1/32**

(22) Anmeldetag: **11.10.89**

(30) Priorität: **19.10.88 DE 3835558**

(43) Veröffentlichungstag der Anmeldung:
**25.04.90 Patentblatt 90/17**

(84) Benannte Vertragsstaaten:
**AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Nemnich, Harry, Dipl.-Ing.**
**Hollerbergstrasse 8**
**D-6208 Bad Schwalbach 5(DE)**
Erfinder: **Bauer, Klaus-Peter, Dipl.-Ing.**
**Peter-Weyer-Strasse 55**
**D-6500 Mainz-Hechtsheim(DE)**

(54) **Verfahren zum Auswählen der Betriebsart einer Mehrdienste-Endeinrichtung.**

(57) Eine Mehrdienste-Endeinrichtung besteht aus einem Telefon- und einem Fernkopierergerät, die eine gemeinsame Tastatur besitzen, über welche im Sendebetrieb der Endeinrichtung eine anzuwählende Nummer eingegeben wird. Nach dem Aussenden jeder einzelnen, über die Tastatur eingegebenen Wahlziffer wird durch einen Stromsensor detektiert, ob ein Schleifenstrom in der Telefonleitung fließt oder nicht. Ein Schleifenstrom fließt nur bei abgehobenem Telefonhörer und, falls ein solcher festgestellt wird, wird die nächste eingegebene Wahlziffer ausgesandt. Im anderen Fall, beim Fehlen eines Schleifenstroms, d.h. wenn der Telefonhörer aufgelegt wurde, ist die Endeinrichtung wieder empfangsbereit.

FIG.1

## Verfahren zum Auswählen der Betriebsart einer Mehrdienste-Endeinrichtung

Die Erfindung betrifft ein Verfahren zum Auswählen der Betriebsart einer Mehrdienste-Endeinrichtung, bestehend aus einem Telefon- und einem Fernkopierergerät, von denen wahlweise eines in Betrieb ist.

Bei einer Mehrdienste-Endeinrichtung handelt es sich beispielsweise um eine Einrichtung, welche die Auswahl zwischen zwei Telekommunikationsdiensten ermöglicht, wie dem Telefon-Dienst und dem Telefax-Dienst.

Wesentliche Bestandteile einer solchen Endeinrichtung sind ein Telefon und ein Fernkopierer, die in einem gemeinsamen Gerät zusammengefaßt sind. Der Telefonhörer des Telefons ist dabei in einer Ablage oder Halterung am Fernkopierer abnehmbar angebracht. Während des Telefonbetriebs wird die zu wählende Telefonnummer über die Tastatur des Fernkopierers eingegeben. Diese Tastatur ist somit eine für beide Geräte gemeinsame Eingabevorrichtung.

Mit dem Abheben des Telefonhörers der Endeinrichtung erscheint in einem Anzeigefeld der Endeinrichtung der Hinweis "Telefonbetrieb", und die Endeinrichtung arbeitet dann als Telefon, und es können die einzelnen Ziffern der zu wählenden Telefonnummer eingegeben werden. Ebenso ist es möglich, vorab eingespeicherte Kurz- und Zielwahlnummern zu wählen, wodurch der Wählvorgang für den Benutzer verkürzt wird und bei Besetztsein der Empfangsseite ein wiederholtes Eintippen der gleichen, längeren Telefonnummer erspart bleibt, da nur jeweils die entsprechende Kurz- bzw. Zielwahlnummer eingegeben werden muß.

Sobald die Verbindung zu der Empfangsseite hergestellt ist, kann gesprochen werden. Ist die Empfangsseite am anderen Ende der Leitung auf Fernkopiererbetrieb geschaltet oder soll nach einem Telefongespräch eine Fernkopie übertragen werden, so wird auf der Sendeseite durch Drücken einer Starttaste auf den Fernkopierer umgeschaltet, so daß dieser auf Sendung geht, um ein in der Leseeinrichtung eingelegtes Dokument zu übertragen. Befindet sich in der Leseeinrichtung des Geräts auf der Empfangsseite kein Dokument, so geht dieses, sobald die Starttaste gedrückt wird, auf Empfang. °

Wird beim Senden des Dokuments der Telefonhörer nicht abgenommen, so arbeitet die Endeinrichtung als Fernkopierer und wird in der üblichen Weise als solcher bedient. Im Empfangsbetrieb der Endeinrichtung hat der Benutzer die Möglichkeit, nach Abnahme des Telefonhörers entweder den Fernkopierer auf Empfang zu schalten oder ein herkömmliches Telefongespräch zu führen. Darüberhinaus kann auch der automatische Empfang des Fernkopierers, bei Abwesenheit von Personen, ausgewählt werden. Bei bereits bekannten Endeinrichtungen aus einem Fernkopierer mit integriertem Telefon tritt als wesentlicher Nachteil auf, daß bei Netzausfall ein ankommender Telefonruf nicht mehr signalisiert werden kann.

Aufgabe der Erfindung ist es, für den wahlweisen Telefon- oder Fernkopiererbetrieb einer Mehrdienste-Endeinrichtung ein Verfahren zu schaffen, bei dem noch während des Eingebens einer Nummer der zu Beginn ausgewählte Telefonbetrieb beendet und die Endeinrichtung wieder in den betriebsbereiten Zustand geschaltet wird.

Diese Aufgabe wird durch ein Verfahren der eingangs beschriebenen Art in der Weise gelöst, daß der Telefon-und der Fernkopiererbetrieb über eine, beiden Geräten gemeinsame Tastatur ausgelöst werden und daß nach dem Aussenden jeder einzelnen, über die Tastatur eingegebenen Wahlziffer von dem Fernkopierergerät auf die Telefonleitung umgeschaltet und detektiert wird, ob ein Schleifenstrom in der Telefonleitung fließt oder nicht.

In Ausgestaltung des Verfahrens wird beim Fließen eines Schleifenstroms in der Telefonleitung der Telefonbetrieb fortgesetzt und die nächste eingegebene Wahlziffer ausgesandt.

Andererseits wird beim Fehlen eines Schleifenstroms in der Telefonleitung die Mehrdienste-Endeinrichtung von der Telefonleitung abgeschaltet und die Telefonleitung für eingehende Anrufe freigegeben.

In weiterer Ausgestaltung des Verfahrens wird die Mehrdienste-Endeinrichtung sowohl als Sende- als auch als Empfangseinrichtung für Telefon- und Fernkopierer betrieben, und es wird, selbst bei Netzausfall, im Empfangsbetrieb ein ankommender Telefonruf akustisch gemeldet und nach Abheben des Telefonhörers die Gesprächsverbindung hergestellt.

Der wesentliche Gedanke des erfindungsgemäßen Verfahrens besteht darin, daß in der Zwischenwahlzeit, d.h. in der Zeitspanne zwischen zwei aufeinanderfolgenden Ziffern einer einzugebenden Nummer von dem Fernkopierergerät auf den Telefonapparat umgeschaltet und geprüft wird, ob der Telefonhörer in der Zwischenzeit aufgelegt wurde. Ist nämlich der Telefonhörer während der Nummerwahl abgenommen, so fließt ein Schleifenstrom in der Telefonleitung, und es erfolgt die Aussendung der nächsten Wahlziffer. Wurde andererseits während der Nummerwahl der Telefonhörer aufgelegt, so fließt kein Schleifenstrom in der Telefonleitung, und es muß dann die Aussendung der nächsten Wahlziffer unterbleiben und die Endeinrich-

2

tung muß die Telefonleitung wieder freigeben, so daß ankommende Telefonanrufe empfangen werden können.

Bei einem Netzausfall, der üblicherweise den Fernkopierer stillegt, ist sichergestellt, daß ein ankommender Telefonruf akustisch gemeldet wird und daß nach dem Abheben des Telefonhörers ein Gespräch mit der Gegenstelle zustandekommt.

Die Erfindung wird im folgenden anhand einiger Blockschaltbilder näher erläutert. Es zeigen:

Fig. 1 das Blockschaltbild einer ersten Ausführungsform einer Mehrdienste-Endeinrichtung, die nach dem erfindungsgemäßen Verfahren arbeitet,

Fig. 2 das Blockschaltbild einer zweiten Ausführungsform einer Mehrdienste-Endeinrichtung, ähnlich der ersten Ausführungsform, und

Fig. 3 einen Ausschnitt aus einer Schaltungskonfiguration zum Umschalten von Telefon- auf Fernkopiererbetrieb, und umgekehrt, einer Mehrdienste-Endeinrichtung gemäß den Figuren 1 und 2.

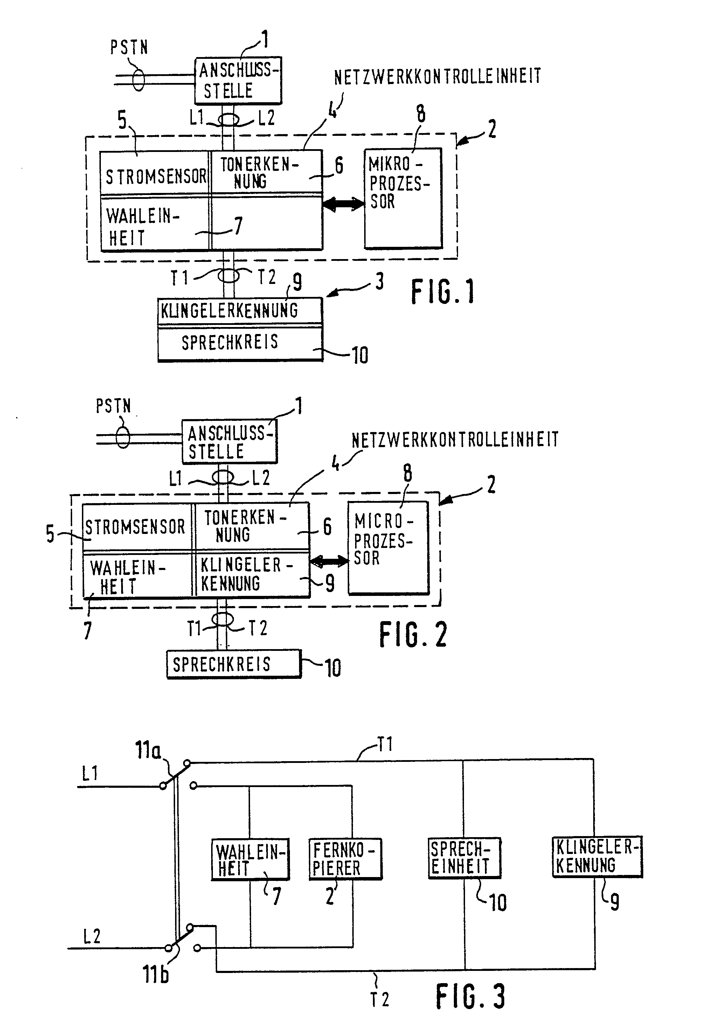

Bei der in Figur 1 gezeigten Endeinrichtung, die aus einem Fernkopierer 2 und einem Telefon 3 besteht, wird über eine Amtsleitung PSTN ein ankommendes Signal in Gestalt eines Rufzeichens einer Anschlußstelle 1 zugeleitet, bei der es sich um eine sogenannte aktive Anschlußdose handelt, in der das Signal durch elektrische bzw. elektronische Bauelemente umgesetzt, umgeleitet und/oder auf mehrere Geräte umgelegt werden kann. Der nicht gezeigte Telefonhörer des Telefons 3 ist in herkömmlicher Weise in eine Gabel eingelegt, die in die Oberseite des Gehäuses des Fernkopierers 2 integriert ist.

Von der Anschlußstelle 1 wird das Signal über Endeinrichtung-Leitungen L1 und L2 dem Fernkopierer 2 zugeleitet, der eine Netzwerkkontrolleinheit 4 und einen Mikroprozessor 8 umfaßt. Auf der Platine der Netzwerkkontrolleinheit 4 befinden sich ein Stromsensor 5, eine Tonerkennung 6 und eine Wahleinheit 7. Die Platine mit dem Mikroprozessor 8 enthält weitere, nicht dargestellte Platinen für die Steuerung des Fernkopierers 2. Zwischen der Netzwerkkontrolleinheit 4 und der Platine mit dem Mikroprozessor 8 besteht über eine Bus-Leitung eine elektrische Verbindung.

Von der Netzwerkkontrolleinheit 4 führen Telefonleitungen T1 und T2 zu dem Telefon 3, das im wesentlichen aus einer Klingelerkennung 9 und einem Sprechkreis 10 besteht, der u.a. den nicht-gezeigten Telefonhörer umfaßt.

Bei der Klingelerkennung 9 und dem Sprechkreis 10 kann es sich jeweils um einen aktiven oder passiven Schaltkreis handeln. Unter einem passiven Schaltkreis ist zu verstehen, daß die einkommenden Signale empfangen und weitergeleitet, jedoch, im Gegensatz zu einem aktiven Schaltkreis, nicht weiterverarbeitet werden. Falls die Klingelerkennung und der Sprechkreis jeweils aktive Schaltungen sind, ist sichergestellt, daß sie über die Amtsleitung gespeist werden, auch dann, wenn der Fernkopierer abgeschaltet, d.h. außer Betrieb, ist.

Das in Figur 2 gezeigte Blockschaltbild einer weiteren Ausführungsform der Endeinrichtung ist ähnlich zu demjenigen der Ausführungsform nach Figur 1, mit dem einzigen Unterschied, daß die Klingelerkennung 9 des Telefons auf der Platine der Netzwerkkontrolleinheit 4 im Fernkopierer 2 angeordnet ist und nicht mit dem Sprechkreis 10 zusammen im Telefon untergebracht ist, wie dies bei der zuerst beschriebenen Ausführungsform der Fall ist.

Die übrigen Schaltkreise sind die gleichen Schaltkreise wie bei der Ausführungsform nach Figur 1 und sind mit den gleichen Bezugszahlen wie diese belegt. Eine nochmalige Beschreibung dieses Schaltkreises unterbleibt daher.

Der Fernkopierer 2 und das Telefon 3 werden durch die gleiche Nummer angewählt. Normalerweise läuft das einkommende Signal über die Klingelerkennung 9 zu dem Sprechkreis 10 des Telefons. Die Klingelerkennung 9 gibt ein akustisches Signal ab, und beim Abheben des Telefonhörers, der Bestandteil des Sprechkreises 10 ist, wird die Verbindung hergestellt, und es kann ein Gespräch mit der Gegenseite geführt werden.

Der Fernkopierer 2 ist währenddessen passiv, d.h. nicht empfangs- bzw. nicht sendebereit. Sobald der Telefonhörer abgenommen wird, fließt in den Telefonleitungen T1 , T2 ein Schleifenstrom, der durch den Stromsensor 5 festgestellt wird. Wird der Telefonhörer aufgelegt, fließt kein Schleifenstrom mehr in den Telefonleitungen, was gleichfalls durch den Stromsensor 5 detektiert wird.

In dem Fall, in welchem der Fernkopierer aktiv ist, was durch Drücken einer entsprechenden Starttaste an dem Gerät erfolgt, ist das Telefon nicht betriebsbereit, und es fließt kein Schleifenstrom in den Telefonleitungen, weder bei aufgelegtem noch bei abgenommenem Telefonhörer.

Die Wahleinheit 7 des Fernkopierers 2 dient zum Aussenden der Impulsfolge beim Wählen einer bestimmten Nummer.

Einzelheiten der Schaltung zum Umschalten von Telefon- auf Fernkopiererbetrieb, oder umgekehrt, werden anhand der Figur 3 erläutert. In den Leitungen L1 , L2 der Endeinrichtung sind Umschaltkontakte 11a, 11b angeordnet, die im Normalbetrieb, bei dem die eingehenden Signale dem Telefon zu-geleitet werden, die Verbindung mit den Telefonleitungen T1 und T2 herstellen. Bei den Umschaltkontakten kann es sich um Kontakte eines Relais, eines elektronischen Schalters oder dergleichen handeln. Die eingehenden Signale lösen dann die Klingelerkennung 9 aus. Beim Abheben des Telefonhörers ist die Gesprächsverbindung durch den Sprechkreis mit der Gegenstelle hergestellt. Es fließt dann ein Schleifenstrom, der von dem Stromsensor festgestellt wird. Sobald der Telefonhörer aufgelegt wird, stellen die Umschaltkontakte 11a, 11b die Verbindung mit dem Fernkopierer 2 her. Es fließt danach kein Schleifenstrom in den Telefonleitungen T1, T2. Kommt es im Empfangsbetrieb der Endeinrichtung zu einem Netzausfall, so ist grundsätzlich der Fernkopierer 2 stillgelegt und kann von einer Gegenstelle nicht angewählt werden. Dies gilt jedoch nicht für das Telefon, da die Amtsleitung unabhängig von dem Netz betrieben wird und somit über die Leitungen L1, L2 einkommende Signale über die Umschaltkontakte 11a, 11b weiterhin der Klingelerkennung 9 zugeleitet werden und der ankommende Ruf akustisch gemeldet wird. Nach dem Abheben des Telefonhörers ist dann das Gespräch mit der Gegenstelle möglich.

Im Sendebetrieb der Endeinrichtung wird beispielsweise der Telefonhörer abgenommen und über die Tastatur die anzuwählende Nummer eingegeben. Dabei sendet die Wahleinheit für jede gewählte Ziffer der eingegebenen Wahlnummer Impulse bzw. bestimmte Frequenzen aus. Nach dem Aussenden jeder einzelnen, über die Tastatur eingegebenen Wahlziffer wird von dem Fernkopierergerät auf die Telefonleitung umgeschaltet und durch den Stromsensor detektiert, ob ein Schleifenstrom in der Telefonleitung fließt oder nicht. Wurde in der Zwischenzeit der Telefonhörer aufgelegt, so fließt kein Schleifenstrom in der Telefonleitung, und das Aussenden des Impulses, der der nachfolgenden Wahlziffer entspricht, durch die Wahleinheit unterbleibt. Gleichzeitig wird die Telefonleitung für eingehende Rufzeichen freigegeben.

Wird durch den Stromsensor ein Schleifenstrom in der Telefonleitung festgestellt, so wird der Telefonbetrieb fortgesetzt und die nächste eingegebene Wahlziffer als Impuls durch die Wahleinheit ausgesandt.

Bei einem Netzausfall ist zwar der Fernkopierer nicht betriebsbereit, jedoch besteht über die Amtsleitung weiterhin die Möglichkeit, Telefongespräche entgegenzunehmen.

**Ansprüche**

1. Verfahren zum Auswählen der Betriebsart einer Mehrdienste-Endeinrichtung, bestehend aus einem Telefon-und einem Fernkopierergerät, von denen wahlweise eines in Betrieb ist, dadurch gekennzeichnet, daß der Telefon- und der Fernkopiererbetrieb über eine, beiden Geräten gemeinsame Tastatur ausgelöst werden und daß nach dem Aussenden jeder einzelnen, über die Tastatur eingegebenen Wahlziffer von dem Fernkopierergerät auf die Telefonleitung umgeschaltet und detektiert wird, ob ein Schleifenstrom in der Telefonleitung fließt oder nicht.

2. Verfahren nach Anspruch 1, dadurch gekennzeichnet, daß beim Fließen eines Schleifenstroms in der Telefonleitung der Telefonbetrieb fortgesetzt und die nächste eingegebene Wahlziffer ausgesandt wird.

3. Verfahren nach Anspruch 1, dadurch gekennzeichnet, daß beim Fehlen eines Schleifenstroms in der Telefonleitung die Mehrdienste-Endeinrichtung von der Telefonleitung abgeschaltet und die Telefonleitung für eingehende Anrufe freigegeben wird.

4. Verfahren nach Anspruch 1, dadurch gekennzeichnet, daß die Mehrdienste-Endeinrichtung sowohl als Sende- als auch als Empfangseinrichtung für Telefon-und Fernkopierer betrieben wird und daß, selbst bei Netzausfall, im Empfangsbetrieb ein ankommender Telefonruf akustisch gemeldet und nach Abheben des Telefonhörers die Gesprächsverbindung hergestellt wird.

FIG.1

FIG.2

FIG.3